# EUROPEAN PATENT APPLICATION

(11) **EP 0 849 918 A2**
(43) Date of publication of application: **24.06.1998**
(21) Application number: 97116479.3
(22) Date of filing: 22.09.1997
(51) Int. Cl.: H04L 25/06

(54) **Method for generating soft decisions in a digital radio receiver**

(30) Priority: 20.12.1996 GB 9626564
(71) Applicant: MOTOROLA LTD, Basingstoke, Hampshire RG22 4PD (GB)
(72) Inventor: Bennett, Irwin Russell, Swindon, Wiltshire SN1 4DR (GB); Page, Andrew, Swindon, Wiltshire SN5 9TW (GB); Golding, Paul, Upper Stratton, Swindon SN2 6JN (GB); Benn, Howard Peter, Swindon, Wiltshire SN5 5AJ (GB)
(74) Representative: Ibbotson, Harold

(57) **Abstract**

The digital radio receiver processes received signals by first determining the values of data bits contained in the received signals. Second, the data bits are assessed a level of confidence to be applied to the data bits. This assessment is done at a group level and applied to each of the data bits contained within that group.

## Description

### Field of the Invention

This invention relates to methods of signal processing within digital radio communication receivers, and more specifically, to methods of signal processing within transceiver units forming stations within digital cellular radio communication systems.

### Background of the Invention

Cellular radio communication systems consist of a base transceiver station which interacts with a number of subsidiary transceiver stations located within an area served by the base transceiver station and constituting a cell of the system. One such type of system is that which operates according to specifications laid down by a body called GSM (Global System for Mobile Communications). Cellular radio communication systems of this type are known as GSM systems and in such systems information is transmitted between one station and another in the form of groups of data bits, there being 116 data bits in a group, known as a burst.

Digital cellular radio communication receivers include a channel decoder, which among other things identifies the nature of an incoming signal, and an equaliser, the function of which is to at least reduce the effects of less than perfect transmission of signals between stations of the radio communication system incorporating the transceivers. As well as determining whether each data bit of an incoming signal is a '1' or '0', the equaliser produces an indication of the confidence with which it has made the decision. The data bit value and the level of confidence indication is known as a 'soft decision'.

By contrast, a determination of the value of a data bit without a level of confidence estimation is known as a 'hard decision'. The use of 'soft decision' as opposed to 'hard decision' equalisation offers a 2 decibels (dB) improvement in the channel decoding process, but it does have the disadvantage that the number of bits of information to be transferred from the equaliser to the channel decoder is increased.

For example, in a typical GSM-based receiver using 16-level confidence indication, the number of bits to be transferred between the equaliser and the channel decoder per incoming burst is 464 data bits (116 x 4) and a number of control units. To transfer this amount of information between the equaliser and the channel decoder, over a time division multiplexed link (TDM) between them, as is usual, requires 58 8-bit TDM time divisions, or time slots.

### Summary of the Invention

It is an object of the present invention to provide an improved method of processing signals within digital radio communication receivers.

According to the present invention, there is provided a method of processing signals received by a digital radio communications receiver, including the operations of determining the values of data bits contained in signal bursts received by the receiver and assessing the level of confidence to be applied to each determination of the values of the signal data bits in the signal bursts, wherein there is included the operation of dividing the signal data bits in each signal burst into groups, assessing a level of confidence to be assigned to the determinations of the values of selected signal data bits in at least one group of signal data bits, and deriving therefrom an assessment of a level of confidence to be applied to the determination of the values of all the signal data bits in the signal burst.

The level of confidence to be assigned to the determinations of the values of signal data bits in a group of the signal burst may be determined by assessing the confidence levels for the determinations of the values of all the signal data bits in the group and taking the mean value as that to be applied to all the determinations of the values of the signal data bits in the group of signal data bits. This process may be extended to all the groups of signal data bits in the signal burst to provide a single level confidence of the determinations of the values of the signal data bits in an entire signal burst or the mean value of the level of confidence for the determination of the values of the signal data bits for just one group, can be taken as the value for the entire signal burst.

Alternatively, the level of confidence to be assigned to the determinations of the values of the signal data bits in a group of the signal burst may be determined by assessing the level of confidence for a determination of the value of a single signal data bit within the group and taking that level of confidence as being applicable to all the determinations of the values of the signal data bits in the group. Again, the single level of confidence for each group of signal data bits can be averaged to provide a single level of confidence to be applied to the determination of the values of all the signal data bits in a signal burst.

### Brief Description of the Drawings

The invention will now be described, by way of example, with reference to the accompanying drawings:
FIG. 1 is a block circuit diagram of an equaliser-channel decoder link in a GSM type radio communication receiver that may incorporate the present invention; and
FIG. 2 is a flow chart illustrating a signal processing method in a digital radio receiver in accordance with the present invention.

### Detailed Description of a Preferred Embodiment

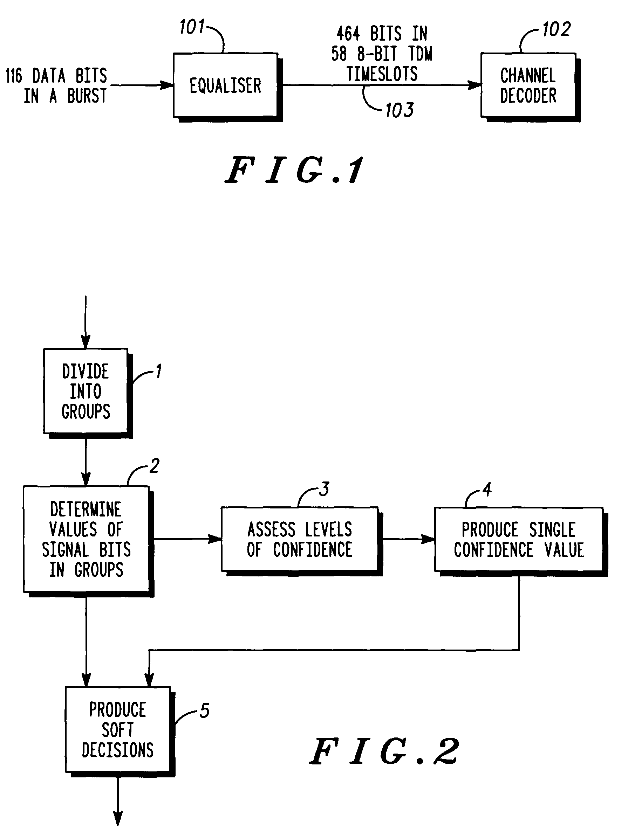

Referring to FIG. 1, a radio communication receiver incorporates a signal equaliser 101 and a channel decoder 102. Incoming traffic signals, divided into signal bursts which contain 116 signal data bits, are applied to the equaliser 101 which removes spurious changes in the intervals between successive bits in a signal burst, and for each signal data bit in a signal burst determines a value (0 or 1) for the bit and its confidence in the determination of the value in order to create a 4-bit soft decision. These soft decisions are applied to the channel decoder 102 over a time division multiplexed link 103.

As explained above, for a GSM-type receiver, with 116 signal data bits per incoming signal burst, 464 data bits plus the control bits per signal burst have to be transferred between the equaliser 101 and the channel decoder 102 over the link 103 and this requires 128 8-bit time division multiplexed time slots.

In the case of the present invention, the basic sequence of operations and nature of the equaliser 101 and the channel decoder 102 are unchanged, but the equaliser 101 is adapted to operate as shown in FIG. 2.

Referring to FIG. 2, an incoming signal burst is divided into groups, within which the parameters of the signal data bits may vary from a norm within predetermined limits (Stage 1). The values ('0' or '1') of the signal data bits within the whole signal burst are determined (Stage 2), an assessment is made of the level of confidence of the determination of the values of the signal data bits in one of the groups of bits within the signal burst (Stage 3), the average level of confidence for the determination of the values of those signal data bits is derived and a corresponding single confidence signal is produced (Stage 4). This confidence signal is combined with the determined values of all the signal data bits in the signal burst by the channel decoder 102 to produce soft decision input signals for the further processing by the channel decoder 102, as before (Stage 5).

Instead of averaging the levels of confidence for the determination of the values of all the signal data bits in a single group of signal data bits in the signal burst, Stage 3 can include the operations of measuring the level of confidence for the determination of the value of a single data bit in each group of the signal burst and deriving the average of the confidence levels associated with these signal data bits to provide a single confidence level signal for all the signal data bits in the signal burst. Any signal data bit can be chosen, for example, it could be the first or last signal data bit in each group of the signal burst, or any other data bit within each group of the signal burst. As before, the single confidence level signal will have 8 values indicating corresponding levels of confidence to be applied to all the signal data bit values determined in the signal burst.

The production of a single confidence level signal for all the signal data bit value determinations within a signal burst reduces the data to be transferred from the equaliser 101 to the channel decoder 102 from 464 data bits associated to a minimum of 116 data bits and 3 confidence bits with a consequent reduction in the number of TDM time slots from 58 to a minimum of 15.

The reduction in the amount of data to be transmitted over the link 104 between the equaliser 101 and the channel decoder 102 can be utilised in two ways. If the bandwidth of the link 104 is maintained at the conventional level, then the time taken to transfer the information data is reduced by a factor of four, approximately. Alternatively, a narrower bandwidth channel can be used for the link 104.

## Claims

1. A method of processing signals received by digital radio communications receiver, including the operations of determining the values of data bits contained in signal bursts received by the receiver and assessing the level of confidence to be applied to each determination of the values of the signal data bits in the signal bursts, wherein there is included the operation of dividing the signal data bits in each signal burst into groups, assessing a level of confidence to be assigned to the determinations of the values of selected signal data bits in at least one group of signal data bits, and deriving therefrom an assessment of a level of confidence to be applied to the determination of the values of all the signal data bits in the signal burst.

2. A method according to Claim 1 wherein the operation of determining the level of confidence to be assigned to the determinations of the values of the selected signal data bits within a group of the signal burst is determined by assessing the confidence levels for the determinations of the values of all the signal data bits in the group of the signal burst and taking the mean thereof as the level of confidence to be assigned to all the signal data bit value determinations within the group of the signal burst.

3. A method according to Claim 2 wherein the mean signal data bit value confidence level is applied to all the signal data bit value determinations within the signal burst.

4. A method according to Claim 2 wherein a mean signal data bit valuation confidence level is determined for each group of signal data bits and the overall mean signal data bit valuation confidence level is applied to the determination of the values of all the signal data bits in the burst.

5. A method according to Claim 1 wherein the level of confidence to be assigned to the determinations of the values of selected signal data bits within a group of signal data bits is determined by assessing the level of confidence for a determination of the value of a single signal data bit in the group of signal data bits and taking that level of confidence as being applicable to all the determinations of the values of the signal data bits in the group of signal data bits.

6. A method according to Claim 5 wherein the single signal data bit valuation confidence level determinations for each group of signal data bits are averaged to provide a single value which is applied to all the signal data bit valuations in the signal burst.
